(19) Europäisches Patentamt European Patent Office Office européen des brevets

(11) **EP 3 772 718 A1**

(12) **EUROPEAN PATENT APPLICATION**

(43) Date of publication:
**10.02.2021 Bulletin 2021/06**

(51) Int Cl.:
*G06Q 40/02* (2012.01)  *G06Q 10/04* (2012.01)

(21) Application number: **19190781.5**

(22) Date of filing: **08.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vocalink Limited**
**London EC4R 3AB (GB)**

(72) Inventors:
• PATEL, Prina Rajendra Kumar
  London, W13 8HB (GB)
• DEWAR, Michael Alan
  Richmond, Surrey TW10 5AA (GB)
• KENDALL, Christopher Paul
  Leighton Buzzard, Buckinghamshire LU7 9GA (GB)

(74) Representative: **D Young & Co LLP**
**120 Holborn**
**London EC1N 2DY (GB)**

(54) **DATA PROCESSING APPARATUS AND METHOD**

(57) A data processing method comprising: recording a plurality of electronic value transfers occurring between a plurality of parties; performing an optimisation process on a matrix indicative of a value of each of net electronic value transfers between each of the parties, wherein the matrix is indicative of a relationship between a first electronic store of value held by each of the parties before execution of the net electronic value transfers and a second electronic store of value held by each of the parties after execution of the net electronic value transfers, and the optimisation process comprises selecting a portion of the electronic value transfers for determining the net electronic value transfers indicated by the matrix so as to minimise a difference between the first and second electronic stores of value held by each of the parties; and outputting the selected portion of the electronic value transfers for processing.

FIG. 1A

**(Cont. next page)**

```
                    ┌──────────────────────────┐
                    │                          │ ⌒ 105
                    │   ┌──────────────────┐    │
                    │   │   Communication  │    │
          106 ⌒─────────│     Interface    │    │
                    │   └──────────────────┘    │
                    │                          │
                    │   ┌──────────────────┐    │
          107 ⌒─────────│     Processor     │    │
                    │   └──────────────────┘    │
                    │                          │
                    │   ┌──────────────────┐    │
          108 ⌒─────────│      Memory       │    │
                    │   └──────────────────┘    │
                    │                          │
                    │   ┌──────────────────┐    │
          109 ⌒─────────│  Storage  Medium  │    │
                    │   └──────────────────┘    │
                    │                          │
                    └──────────────────────────┘
```

# FIG. 1B

## Description

### BACKGROUND

### Field of the Disclosure

The present disclosure relates to a data processing apparatus and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Modern data processing systems allow electronic stores of value to be transferred between many different parties many times every day. Processing these transfers efficiently is a computationally intensive task. A technical solution for reducing the computational burden of such processing is therefore desirable.

### SUMMARY

The present disclosure is defined by the claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Figures 1A and 1B respectively schematically show a central data processing device and party data processing device, according to an embodiment;
Figure 2 schematically shows a network connecting the central data processing device with a number of the party data processing devices, according to an embodiment;
Figure 3 schematically shows an algorithm for minimising a flow norm, according to an embodiment;
Figure 4 schematically shows a data processing method, according to an embodiment; and
Figure 5 schematically shows an optimisation process, according to an embodiment.

### DESCRIPTION OF THE EMBODIMENTS

Referring now to the drawings, wherein like reference numerals designate identical or corresponding parts throughout the several views.

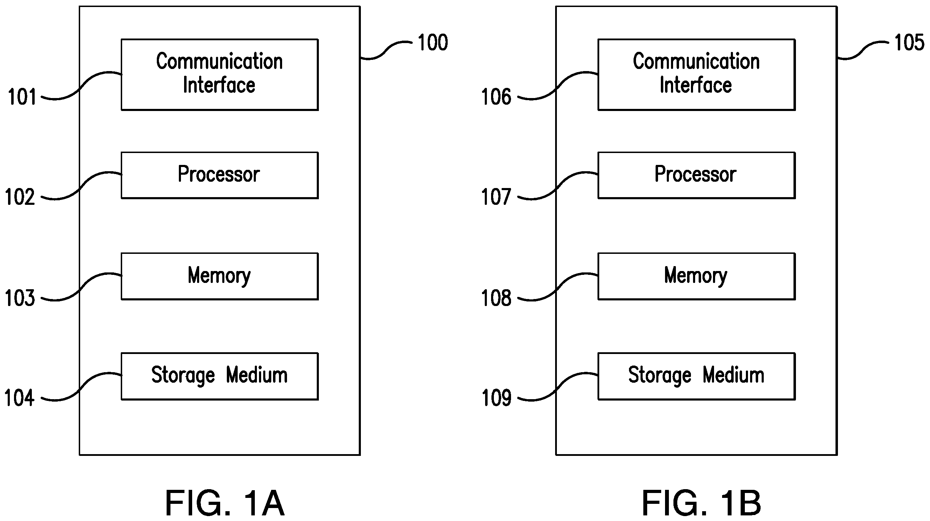

Figures 1A and 1B show a central data processing device 100 (central device) and party data processing device 105 (party device), respectively. Each party who wishes to participate in transfers of electronic value with another party controls a respective party device. The central device is controlled by an operator of a communications network connecting the party devices.

The central device 100 comprises a communication interface 101 for sending and/or receiving electronic information over the network, a processor 102 for processing electronic instructions, a memory 103 for storing the electronic instructions to be processed and input and output data associated with the electronic instructions and a storage medium 104 (e.g. in the form of a hard disk drive, solid state drive, tape drive or the like) for long term storage of electronic information. Each of the communication interface 101, processor 102 and memory 103 are implemented using appropriate circuitry, for example. The processor 102 controls the operation of each of the communication interface 101, memory 103 and storage medium 104.

Each party device 105 comprises a communication interface 106 for sending and/or receiving electronic information over the network, a processor 107 for processing electronic instructions, a memory 108 for storing the electronic instructions to be processed and input and output data associated with the electronic instructions and a storage medium 109 (e.g. in the form of a hard disk drive, solid state drive, tape drive or the like) for long term storage of electronic information. Each of the communication interface 106, processor 107 and memory 108 are implemented using appropriate circuitry, for example. The processor 107 controls the operation of each of the communication interface 106, memory 108 and storage medium 109.

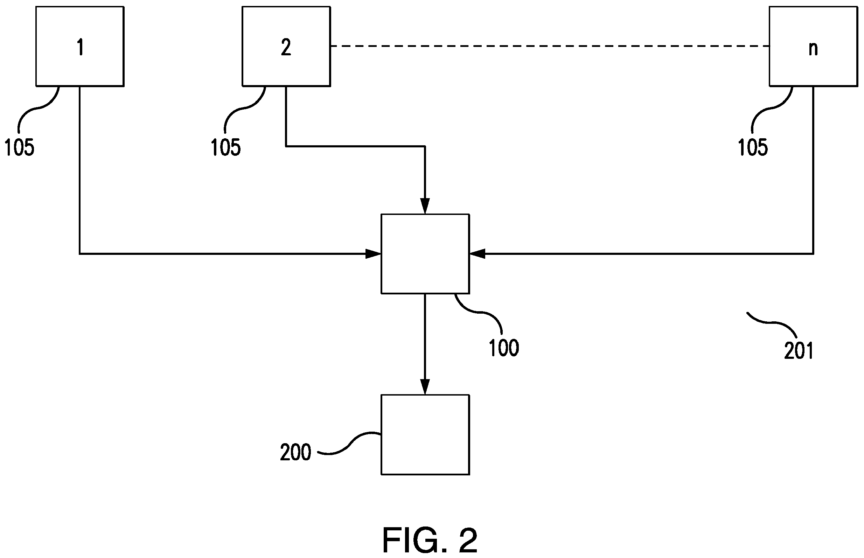

Figure 2 shows the network 201 connecting the central device 100 with n party devices 105. An electronic store of value associated with each respective party device is stored in the storage medium 104 of the central device (e.g. as a number in a database). Each party device is configured to send electronic messages to the central device instructing the transfer of electronic value from that party to another party. The present technique helps alleviate the computation burden of implementing efficient transfers of electronic value. In particular, efficient transfers of electronic value are transfers which, where possible, result in a low amount of fluctuation in the electronic store of value associated with each party (thereby reducing the uncertainty of each party in the amount of value they must electronically store at any given time). Implementing transfers efficiently requires a suitable grouping of the transfers (by central device 100) prior to passing those grouped transfers (as one or more electronic messages) to a transfer processing device 200 to process the transactions. Traditionally, determining a suitable grouping of the transactions is a computationally intensive problem to solve. The present technique helps to alleviate this computational burden.

In the following description, each party is a financial institution (e.g. a bank), the electronic store of value associated with each respective party is an amount of electronic funds (referred to as a reserve or balance) held by that party at a central bank and the transfers of electronic value between the parties are transfers (transactions) of those electronic funds. Thus, each party device 105 is controlled by a respective financial institution, the central device 100 is controlled by the central bank and the transfer processing device 200 is a suitable payments processing device. This is a useful example of the efficient transfer problem. Banks are required to provide a certain amount of reserve to the central bank at the start of each day to fund the day's high value transactions. Keeping this reserve to a minimum is important to the banks as this allows for funds to be used elsewhere. However, the reserve should be large enough to ensure all submitted transactions can be made without placing the system at risk (by a bank running out of reserves). Implementing transactions efficiently thus reduces the fluctuation in the reserve of each bank and allows banks to safely have a smaller reserve than would otherwise be possible. However, this is only an example and it will be appreciated that the present technique may be applied to other systems in which it is desirable for transfers of electronic value between parties to be implemented efficiently.

We consider a stream X of requested transactions between n banks (arriving one by one as electronic messages from the party device 105 of the bank requesting the transaction to the central device 100), that starts at the beginning of the day and ends at the close of business. Each transaction is represented as the 5-tuple (j, i, t, v, p) where j is the sending bank, i is the receiving bank, t is the time of the transaction, v is the value of the transaction and p is the priority of the payment. We will use the shorthand

$$x_{ij} = (i, j, t, v, p)$$

to represent the event of a transaction from bank i to bank j. We assume each transaction has 3 levels of priority, relating to the allowed delay between issuing time and processing time (they may be a different number of priority levels):

- Urgent - no delay, payment must be processed immediately
- High - e.g. up to 2 hours
- Normal - e.g. up to 4 hours

There is no requirement to wait any longer than necessary to settle High or Normal priority payments. They become Urgent payments at their respective deadlines.

We frame the efficient transaction problem as a search for the optimal grouping of transactions such that the stream of transactions X is grouped into a sequence of T transaction groups, e.g.

$$X = \bigcup_{t=1}^{T} \{X_1, X_2, \ldots X_T\}$$

where $X_t$, for t = 1 ... T, represents a group of transactions to be settled, such that the groups are settled in order throughout the day. It should be noted that this breaks the strict ordering of the component transactions, such that transactions that appeared earlier in X can be settled after later transactions.

In this way, by requiring each group $X_t$ to be settled as a consolidated set of transactions, we can choose the elements of each group to maximise the Liquid Efficiency Ratio (LER, defined below) without violating either the balance requirements of a given bank or the priority requirements of any individual transaction.

The per-bank LER (the LER of each bank) is defined as

$$\text{LER}(i) = \frac{F_i}{\sum_k x_i^k},$$

where i is the bank in question, $F_i$ is the external funding bank i has received (e.g. the starting balance for the day) and $x_i^k$ is the $k^{th}$ debit from bank i. The system-wide LER (the LER of all banks) is defined as

$$\text{LER} = \sum_i^n \text{LER}(i).$$

The system-wide LER can be calculated at any point throughout the day as desired, taking into account the external funding and transactions up to that point.

In order to represent the multi-lateral flow of funds across the network of n banks, we define a transition matrix

$$A(X) \in \mathbb{R}^{n \times n}$$

that describes the effect the aggregated transaction group X has on the balances of each bank:

$$\vec{b}_{\text{new}} = A(X)\vec{b}_{\text{old}}.$$

Here, $\vec{b}_{old}$ is a vector whose elements are the reserve values of each bank before the transactions in question, $\vec{b}_{new}$ is a vector whose elements are the reserve values of each bank after the transactions in question, and the matrix element $a_{ij}$ is the proportion of bank I's new balance to be paid by bank j, relative to bank j's current balance:

$$a_{ij} = \frac{\sum_i x_{ij}}{b_{\text{old},j}}.$$

The transition matrix is then constructed as

$$A(X) = \begin{bmatrix} 1 & a_{12} & a_{13} & \dots & a_{1n} \\ a_{21} & 1 & a_{23} & \dots & a_{2n} \\ \vdots & \vdots & \vdots & \ddots & \vdots \\ a_{n1} & a_{n2} & a_{n3} & \dots & 1 \end{bmatrix}$$

such that $a_{ij}$ is positive when bank i receives funds from bank j and negative when bank i owes bank j. In constructing this matrix we net bi-lateral transactions so there is only ever 1 transaction between any 2 banks.

In an embodiment, the present technique works by picking the subset of transactions $\tilde{X}_t$ such that the matrix

$$A(\tilde{X}_t)$$

minimises the difference between the old balance $b_{old}$ and new balance $b_{new}$ of all the banks in the network. To achieve this, we seek to minimise the Euclidean norm of $\vec{b}_{new} - \vec{b}_{old}$ which, substituting for $\vec{b}_{new}$, gives

$$f(\tilde{X}_t) = \left\| (A(\tilde{X}_t) - I)\vec{b}_{\text{old}} \right\|.$$

We refer to $f(\tilde{X}_t)$ as the "flow norm" as, by carefully choosing $\tilde{X}_t$ to minimise $f(\tilde{X}_t)$, the magnitude of the summed value of transactions flowing between all the banks in the network is minimised. This, in turn, minimises the denominator of the LER and hence maximises the efficiency of the system.

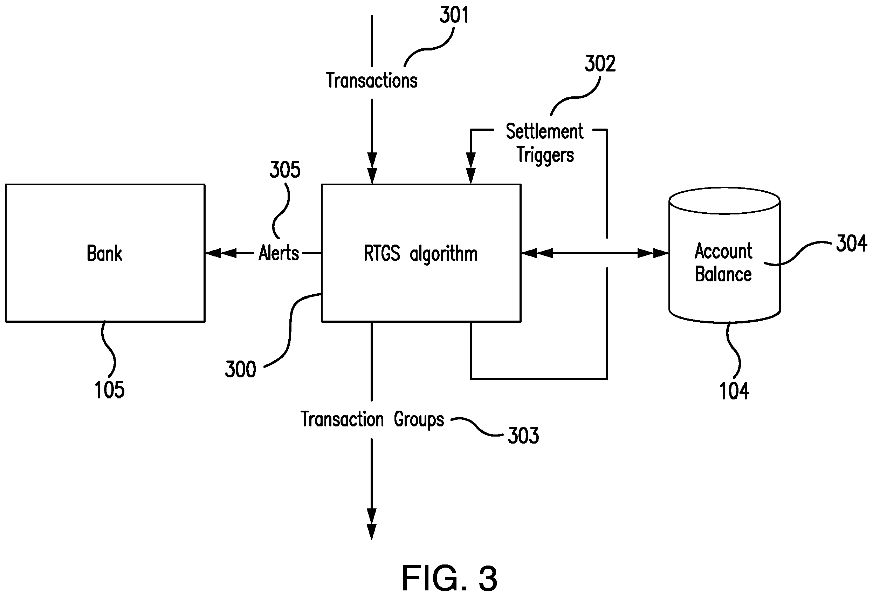

An algorithm for minimising the flow norm, according to an embodiment, is described with reference to the data flow of Figure 3. Figure 3 shows the data flow between the party device 105 of a bank, the storage medium 104 of central device 100 and the algorithm (a Real Time Gross Settlement, RTGS, algorithm). The algorithm is executed by the processor 102 of central device 100. The algorithm has three components:

1. Priority Promotion: how we manage the increasing urgency of low priority payments
2. Rejection Sampling: how we use a Monte Carlo technique to choose a set of transactions that minimises the flow norm
3. Balance Violation: how we sequentially remove transactions from the optimal group $\tilde{X}_t$ to avoid balance violations.

Priority Promotion

As requested transactions 301 arrive at the central device 100 as electronic messages, they are stored in the storage medium 104 until a settlement event 302 is triggered. A settlement event occurs when either an Urgent transaction is received or when a lower priority transaction is promoted to an Urgent transaction (as occurs when the delay time of that lower priority transaction expires). Also, a final settlement event is triggered at the close of business at the end of the day, where all remaining transactions are settled (even if no Urgent transaction is received or low priority transaction promoted).

Rejection Sampling

When a settlement event occurs, in order to explore the set of possible combinations of transactions to form the group $\tilde{X}_t$ to be processed, the algorithm performs rejection sampling as follows:

a) Start with the transaction that triggered the settlement event as the only transaction in $\tilde{X}_t$ (which we refer to as the proposed settlement set).
b) Calculate $A(\tilde{X}_t)$ and $f(\tilde{X}_t)$.
c) Pick a new proposed transaction from the set of possible transactions (i.e. all those transactions currently stored in the storage medium 104) at random and add it to $\tilde{X}_t$.
d) Recalculate $A(\tilde{X}_t)$. This describes the effect that adding the proposed transaction to $\tilde{X}_t$ has on the system's component balances. Given the recalculated $A(\tilde{X}_t)$, recalculate $f(\tilde{X}_t)$.
e) If $f(\tilde{X}_t)$ is decreased, then keep the proposed transaction in $\tilde{X}_t$.
f) If $f(\tilde{X}_t)$ is increased, then keep the proposed transaction in $\tilde{X}_t$ according to a probability which decreases with the increase in $f(\tilde{X}_t)$ (e.g. the probability is inversely proportional to the increase in $f(\tilde{X}_t)$). This way, transactions that only increase the flow norm a little are more likely to be accepted, but transactions that increase the flow norm by a large amount less unlikely to be accepted. If the proposed transaction is rejected, return it to the set of possible transactions.

g) Determine if either all possible transactions (i.e. all those currently stored in the storage medium 104) have been included or a predetermined number transactions in a row has been rejected.

h) If the determination at (g) is positive, return $\tilde{X}_t$ as the transaction set to be processed. The transactions in $\tilde{X}_t$ are then passed to the payment processing device 200 for processing. Otherwise, return to step (c).

In an embodiment, this algorithm can be executed multiple times in order to explore the space of possible transaction groupings. The transaction group $\tilde{X}_t$ that creates the minimum flow norm out of each of those algorithm executions is then returned and the transactions 303 in that group passed to the payment processing device 200 for processing. In an embodiment, in the case that no further transactions are successfully added to $\tilde{X}_t$ to balance the triggering transaction (e.g. as occurs if the triggering transaction is very large and there are no other similarly sized transactions which can be added to keep $f(\tilde{X}_t)$ sufficiently low), then the algorithm returns only the triggering transaction (i.e. $\tilde{X}_t$ contains only the triggering transaction) for processing by the payment processing device 200.

The determination of whether or not the proposed transaction at step (f) is to be kept is carried out using any suitable method. For example, the proportional increase in $f(\tilde{X}_t)$ is computed (e.g. if $f(\tilde{X}_t)$ increases by 50%, the proportion increase is 0.5, if $f(\tilde{X}_t)$ increases by 25%, the proportional increase is 0.25, etc.). A random number between 0 and 1 is be generated. If the proportional increase in $f(\tilde{X}_t)$ is less than the random number (this becomes less likely as the proportional increase gets bigger), then the proposed transaction is kept. Otherwise, the proposed transaction is rejected.

Balance Violation

It is possible that the result of processing a transaction group $\tilde{X}_t$ determined according to the algorithm causes a bank to run out of funds at the central bank such that one or more elements of $\vec{b}_{new} = A(\tilde{X}_t)\vec{b}_{old}$ falls below zero. In this case, one or more transactions are removed from the proposed group $\tilde{X}_t$ until all elements of $\vec{b}_{new}$ are above zero (thus ensuring no transaction groups $\tilde{X}_t$ are carried out which cause a bank to run out of funds). In an embodiment, this is carried out as follows:

a) Starting with the smallest value debit transaction of the offending bank (the bank whose new balance falls below zero), remove successively larger debit transactions from the proposed settlement set $\tilde{X}_t$ until the projected balance of the offending bank (determined by recalculating $\vec{b}_{new}$ using the remaining transactions of $\tilde{X}_t$) is greater than 0.

b) For each rejected transaction, create an INFO alert (an example of an alert 305) detailing the transactions that were unable to be settled. The INFO alert is transmitted as an electronic message to the offending bank (thereby informing the bank that they may need to top up their reserves at the central bank).

c) If an Urgent transaction needs to be rejected, create a WARN alert (another example of an alert 305) to inform the offending bank that an Urgent transaction cannot be settled. The WARN alert is transmitted as an electronic message to the offending bank (thereby informing the bank that they may need to top up their reserves at the central bank).

The initial balance 304 of each bank at the central bank (for inclusion in $\vec{b}_{old}$) is stored in the storage medium 104 (e.g. in a database relating a unique identifier of each bank with a number indicating its respective balance).

In an embodiment, rather than debit transactions being removed from $\tilde{X}_t$ in response to the projected balance of the offending bank falling below, another threshold value greater than zero may be chosen so that debit transactions are removed from $\tilde{X}_t$ in response to the projected balance of the offending bank falling below the threshold value and until the projected balance of the offending bank is greater than the threshold value. Using a threshold value greater than zero helps further reduce the risk of a bank not having sufficient funds to complete an instructed debit transaction.

The above-mentioned algorithms are exemplary and alternative algorithms for minimising $f(\tilde{X}_t)$ and thus finding an optimal set of transfers $\tilde{X}_t$ may be used. For example, more complex Markov chain Monte Carlo (MCM) algorithms and/or algorithms that take into account forecasts of future events may be used, as long as they are able to minimise $f(\tilde{X}_t)$ and generate a suitable proposed settlement group $\tilde{X}_t$.

In this example, the present technique is applied to multilateral real time gross settlement between financial institutions that minimises the flow of capital across the network. However, it will be appreciated that, more generally, the present technique allows the implementation of efficient transfers of any type of electronic store of value. This is achieved by the processor 102 of the central device 100 generating and manipulating suitable matrices and applying the above-mentioned algorithms. Such matrix generation and manipulation is a computational linear algebra problem which can be solved extremely rapidly, thereby allowing the grouping of instructed transfers to be quickly optimised and processed despite the fact that a complex search takes place at each settlement event. The computational burden of efficiently grouping instructed payment transfers is thus reduced whilst maintaining a rapid execution time.

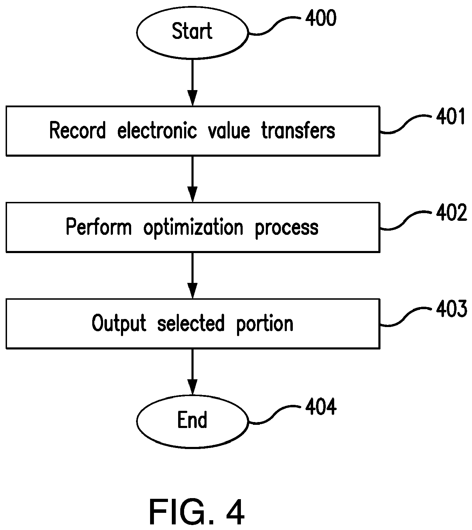

Figure 4 shows, more generally, a data processing method executed by the processor 102 of central device 100, according to an embodiment.

The method starts at step 400.

At step 401, a plurality of electronic value transfers (e.g. electronic transactions X instructed by electronic messages received at communication interface 101) occurring between a plurality of parties (e.g. financial institutions) is recorded in storage medium 104.

At step 402, an optimisation process is performed on a matrix (e.g. $A(\tilde{X}_t)$) indicative of a value of each of net electronic value transfers (e.g. $a_{ij}$) between each of the parties. The matrix is indicative of a relationship between a first electronic store of value held by each of the parties before execution of the net electronic value transfers (e.g. initial central bank balance $\vec{b}_{old}$) and a second electronic store of value held by each of the parties after execution of the net electronic value transfers (e.g. final central bank balance $\vec{b}_{new}$). The optimisation process (e.g. the above-mentioned rejection sampling) comprises selecting a portion of the electronic value transfers (e.g. $\tilde{X}_t$) for determining the net electronic value transfers indicated by the matrix so as to minimise a difference (e.g. indicated by $f(\tilde{X}_t)$) between the first and second electronic stores of value held by each of the parties.

At step 403, the selected portion of the electronic value transfers is output for processing (via communication interface 101 to transfer processing device 200 for processing).

The method ends at step 404.

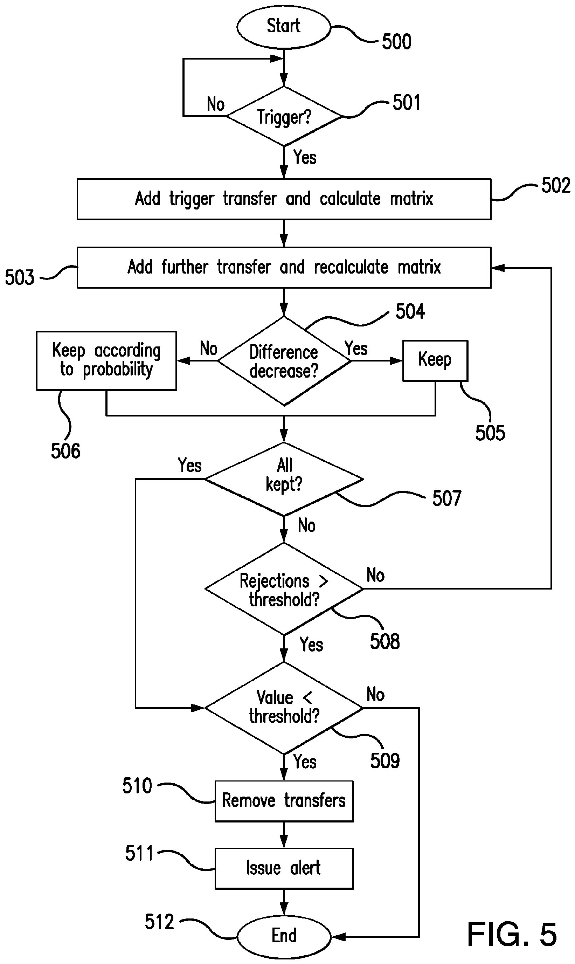

Figure 5 shows the optimisation process of step 402 in more detail, according to an embodiment. The above-mentioned rejection sampling is an example of the optimisation process.

The process starts at step 500.

At step 501, it is determined if a trigger event has occurred. Each of the electronic value transfers is associated with a time by which the electronic value transfer is to be processed (e.g. electronic transactions are each associated with an Urgent, High or Normal priority) and a trigger event occurs when the time associated with one of the electronic value transfers is reached. If a trigger event has not occurred, then the process returns to step 501. Otherwise, the process proceeds to step 502.

At step 502, the one of the electronic value transfers associated with the time that has been reached (which caused the trigger event) is added to the portion of the electronic value transfers (so that it is initially the only electronic value transfer in the portion of electronic value transfers) and the matrix is calculated based on the value of this electronic value transfer.

At step 503, another one of the electronic value transfers is added to the portion of the electronic value transfers (e.g. randomly) and the matrix is recalculated (using the values of both the original electronic value transfer which caused the trigger event and the newly added electronic value transfer).

At step 504, it is determined, based on the matrix of step 502 and the matrix of step 503, if the difference between the first and second electronic stores of value held by each of the parties decreases (e.g. $f(\tilde{X}_t)$ for each matrix is calculated and it is determined if $f(\tilde{X}_t)$ of the matrix of step 503 is less than $f(\tilde{X}_t)$ of the matrix of step 502). If the difference between the first and second electronic stores of value held by each of the parties decreases, then the electronic value transfer added at step 503 is kept in the portion of the electronic value transfers (step 505). Otherwise, the electronic value transfer added at step 503 is kept in the portion of the electronic value transfers according to a probability which decreases as the difference between the first and second electronic stores of value held by each of the parties increases (step 506). The electronic value transfer added at step 503 therefore may or may not be kept in the portion of electronic transfer values.

At step 507, it is determined if all the electronic value transfers stored in the storage medium 104 are included in the portion of the electronic value transfers. If all the electronic value transfers have been included, then the process proceeds to step 509. Otherwise, the process proceeds to step 508.

At step 508, it is determined if a number of consecutive electronic value transfers added at step 503 and rejected at step 506 exceeds a threshold (e.g. a predefined number of consecutive rejections stored in the storage medium 104). If such a number of consecutive rejections have occurred, then the process proceeds to step 509. Otherwise, the process returns to step 503.

At step 509, it is determined if a second electronic store of value held by one of the parties falls below a threshold (e.g. a predefined minimum electronic store of value stored in the storage medium 104, such as a minimum account balance). If a second store of value held by one of the parties does not fall below the threshold, then the process ends at step 512. Otherwise, the process proceeds to step 510. At step 510, one or more electronic value transfers from the one of the parties is removed from the selected portion of electronic value transfers until the second electronic store of value held by the one of the parties does not fall below the threshold. At step 511, an alert message is transmitted (by communication interface 101) to the one of the parties indicating that the one or more electronic value transfers were removed from the selected portion of electronic value transfers. The above-mentioned INFO and WARN alerts are examples of alert messages. The process then ends at step 512.

In an embodiment, the optimisation process comprises repeating the process of Figure 5 a plurality of times to generate a respective plurality of portions of electronic value transfers. It is then determined which of the plurality of portions of electronic value transfers results in the smallest difference between the first and second electronic stores of value held by each of the parties (e.g. the smallest value of $f(\tilde{X}_t)$). The portion of electronic value transfers resulting in the smallest difference between the first and second electronic stores of value held by each of the parties is then output at step 403.

Embodiments of the present technique are defined by the following numbered clauses:

1. A data processing method comprising:

recording a plurality of electronic value transfers occurring between a plurality of parties;
performing an optimisation process on a matrix indicative of a value of each of net electronic value transfers between each of the parties, wherein
the matrix is indicative of a relationship between a first electronic store of value held by each of the parties before execution of the net electronic value transfers and a second electronic store of value held by each of the parties after execution of the net electronic value transfers, and
the optimisation process comprises selecting a portion of the electronic value transfers for determining the net electronic value transfers indicated by the matrix so as to minimise a difference between the first and second electronic stores of value held by each of the parties; and
outputting the selected portion of the electronic value transfers for processing.

2. A method according to clause 1, wherein:

a matrix indicative of a value of each of net electronic value transfers between each of the parties for a set of electronic value transfers X is:

$$A(X) = \begin{bmatrix} 1 & a_{12} & a_{13} & \ldots & a_{1n} \\ a_{21} & 1 & a_{23} & \ldots & a_{2n} \\ \vdots & \vdots & \vdots & \ddots & \vdots \\ a_{n1} & a_{n2} & a_{n3} & \ldots & 1 \end{bmatrix}$$

wherein $a_{ij}$ is a net electronic value transfer to a party $i$ from a party $j$, and
the optimisation process comprises minimising a function:

$$f(\tilde{X}_t) = \left\| (A(\tilde{X}_t) - I)\vec{b}_{old} \right\|$$

wherein $\widetilde{X_t}$ is the selected portion of the electronic value transfers, I is the identity matrix and $\vec{b}_{old}$ is indicative of the first electronic store of value held by each of the parties.

3. A method according to any preceding clause, wherein:

each of the electronic value transfers is associated with a time by which the electronic value transfer is to be processed; and
the optimisation process and outputting of the selected portion of the electronic value transfers is triggered when the time associated with one of the electronic value transfers is reached.

4. A method according to clause 3, wherein the optimisation process comprises:

(a) adding the one of the electronic value transfers associated with the time that has been reached to the portion of the electronic value transfers;
(b) calculating the matrix based on the value of the electronic value transfer of (a);
(c) adding another one of the electronic value transfers to the portion of the electronic value transfers;
(d) recalculating the matrix based on the values of the electronic value transfers in the portion of electronic value transfers at (c) and determining, based on the matrix of (b) and the matrix of (d), if the difference between the first and second electronic stores of value held by each of the parties decreases;
(e) if the difference between the first and second electronic stores of value held by each of the parties decreases, keeping the electronic value transfer of (c) in the portion of the electronic value transfers;
(f) if the difference between the first and second electronic stores of value held by each of the parties does not decrease, keeping the electronic value transfer of (c) in the portion of the electronic value transfers according to a probability which decreases as the difference between the first and second electronic stores of value held by each of the parties increases;
(g) determining whether either (i) all the electronic value transfers are included in the portion of the electronic value transfers or (ii) a number of consecutive rejections of electronic value transfers of (c) exceeds a threshold;
(h) outputting the portion of the electronic value transfers when the determination of (g) is positive or returning to (c) when the determination of (g) is negative.

5. A method according to clause 4, wherein the optimisation process comprises:

repeating steps (a) to (h) a plurality of times to generate a respective plurality of portions of electronic value transfers;

determining which of the plurality of portions of electronic value transfers results in the smallest difference between the first and second electronic stores of value help by each of the parties; and

outputting the portion of electronic value transfers resulting in the smallest difference between the first and second electronic stores of value held by each of the parties.

6. A method according to any preceding clause wherein, if the result of the optimisation process is that a second electronic store of value held by one of the parties falls below a threshold, then the method comprises:

removing one or more electronic value transfers from the one of the parties from the selected portion of electronic value transfers until the second electronic store of value held by the one of the parties does not fall below the threshold; and outputting all electronic value transfers of the selected portion of electronic value transfers for processing except the one or more removed electronic value transfers.

7. A method according to clause 6, comprising transmitting an electronic alert message to the one of the parties indicating that the one or more electronic value transfers were removed from the selected portion of electronic value transfers.

8. A method according to any preceding clause, wherein each of the parties is a financial institution and each electronic value transfers is a transfer of electronic funds.

9. A data processing apparatus comprising circuitry configured to:

record a plurality of electronic value transfers occurring between a plurality of parties; perform an optimisation process on a matrix indicative of a value of each of net electronic value transfers between each of the parties, wherein the matrix is indicative of a relationship between a first electronic store of value held by each of the parties before execution of the net electronic value transfers and a second electronic store of value held by each of the parties after execution of the net electronic value transfers, and the optimisation process comprises selecting a portion of the electronic value transfers for determining the net electronic value transfers indicated by the matrix so as to minimise a difference between the first and second electronic stores of value held by each of the parties; and outputting the selected portion of the electronic value transfers for processing.

10. A program for controlling a computer to perform a method according to any one of clauses 1 to 8.

11. A non-transitory storage medium storing a program according to clause 10.

Numerous modifications and variations of the present disclosure are possible in light of the above teachings. It is therefore to be understood that within the scope of the appended claims, the disclosure may be practiced otherwise than as specifically described herein.
In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.
It will be appreciated that the above description for clarity has described embodiments with reference to different functional units, circuitry and/or processors. However, it will be apparent that any suitable distribution of functionality between different functional units, circuitry and/or processors may be used without detracting from the embodiments.
Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.
Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

**Claims**

1. A data processing method comprising:

recording a plurality of electronic value transfers occurring between a plurality of parties;

performing an optimisation process on a matrix indicative of a value of each of net electronic value transfers between each of the parties, wherein

the matrix is indicative of a relationship between a first electronic store of value held by each of the parties before execution of the net electronic value transfers and a second electronic store of value held by each of the parties after execution of the net electronic value transfers, and

the optimisation process comprises selecting a portion of the electronic value transfers for determining the net electronic value transfers indicated by the matrix so as to minimise a difference between the first and second electronic stores of value held by each of the parties; and

outputting the selected portion of the electronic value transfers for processing.

2. A method according to claim 1, wherein:

a matrix indicative of a value of each of net electronic value transfers between each of the parties for a set of electronic value transfers X is:

$$A(X) = \begin{bmatrix} 1 & a_{12} & a_{13} & \dots & a_{1n} \\ a_{21} & 1 & a_{23} & \dots & a_{2n} \\ \vdots & \vdots & \vdots & \ddots & \vdots \\ a_{n1} & a_{n2} & a_{n3} & \dots & 1 \end{bmatrix}$$

wherein $a_{ij}$ is a net electronic value transfer to a party $i$ from a party $j$, and

the optimisation process comprises minimising a function:

$$f(\widetilde{X}_t) = \left\| (A(\widetilde{X}_t) - I)\vec{b}_{\text{old}} \right\|$$

wherein $\widetilde{X}_t$ is the selected portion of the electronic value transfers, $I$ is the identity matrix and $\vec{b}_{\text{old}}$ is indicative of the first electronic store of value held by each of the parties.

3. A method according to any preceding claim, wherein:

each of the electronic value transfers is associated with a time by which the electronic value transfer is to be processed; and

the optimisation process and outputting of the selected portion of the electronic value transfers is triggered when the time associated with one of the electronic value transfers is reached.

4. A method according to claim 3, wherein the optimisation process comprises:

(a) adding the one of the electronic value transfers associated with the time that has been reached to the portion of the electronic value transfers;

(b) calculating the matrix based on the value of the electronic value transfer of (a);

(c) adding another one of the electronic value transfers to the portion of the electronic value transfers;

(d) recalculating the matrix based on the values of the electronic value transfers in the portion of electronic value transfers at (c) and determining, based on the matrix of (b) and the matrix of (d), if the difference between the first and second electronic stores of value held by each of the parties decreases;

(e) if the difference between the first and second electronic stores of value held by each of the parties decreases, keeping the electronic value transfer of (c) in the portion of the electronic value transfers;

(f) if the difference between the first and second electronic stores of value held by each of the parties does not decrease, keeping the electronic value transfer of (c) in the portion of the electronic value transfers according to a probability which decreases as the difference between the first and second electronic stores of value held by each of the parties increases;

(g) determining whether either (i) all the electronic value transfers are included in the portion of the electronic value transfers or (ii) a number of consecutive rejections of electronic value transfers of (c) exceeds a threshold;

(h) outputting the portion of the electronic value transfers when the determination of (g) is positive or returning to (c) when the determination of (g) is negative.

5. A method according to claim 4, wherein the optimisation process comprises:

repeating steps (a) to (h) a plurality of times to generate a respective plurality of portions of electronic value transfers;

determining which of the plurality of portions of electronic value transfers results in the smallest difference between the first and second electronic stores of value help by each of the parties; and

outputting the portion of electronic value transfers resulting in the smallest difference between the first and second electronic stores of value held by each of the parties.

6. A method according to any preceding claim wherein, if the result of the optimisation process is that a second electronic store of value held by one of the parties falls below a threshold, then the method comprises:

removing one or more electronic value transfers from the one of the parties from the selected portion of electronic value transfers until the second electronic store of value held by the one of the parties does not fall below the threshold; and outputting all electronic value transfers of the selected portion of electronic value transfers for processing except the one or more removed electronic value transfers.

7. A method according to claim 6, comprising transmitting an electronic alert message to the one of the parties indicating that the one or more electronic value transfers were removed from the selected portion of electronic value transfers.

8. A method according to any preceding claim, wherein each of the parties is a financial institution and each electronic value transfers is a transfer of electronic funds.

9. A data processing apparatus comprising circuitry configured to:

record a plurality of electronic value transfers occurring between a plurality of parties; perform an optimisation process on a matrix indicative of a value of each of net electronic value transfers between each of the parties, wherein the matrix is indicative of a relationship between a first electronic store of value held by each of the parties before execution of the net electronic value transfers and a second electronic store of value held by each of the parties after execution of the net electronic value transfers, and the optimisation process comprises selecting a portion of the electronic value transfers for determining the net electronic value transfers indicated by the matrix so as to minimise a difference between the first and second electronic stores of value held by each of the parties; and outputting the selected portion of the electronic value transfers for processing.

10. A program for controlling a computer to perform a method according to any one of claims 1 to 8.

11. A non-transitory storage medium storing a program according to claim 10.

FIG. 1A

FIG. 1B

FIG. 2

FIG. 3

EP 3 772 718 A1

Start ———400

↓

Record electronic value transfers ——401

↓

Perform optimization process ——402

↓

Output selected portion ——403

↓

End ——404

# FIG. 4

FIG. 5

Europäisches
Patentamt

European
Patent Office

Office européen
des brevets

**EUROPEAN SEARCH REPORT**

Application Number

EP 19 19 0781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/030687 A1 (PANTHAKI BEHRAM [US] ET AL) 4 February 2010 (2010-02-04) * the whole document * ----- | 1-11 | INV. G06Q40/02 G06Q10/04 |
| | | | TECHNICAL FIELDS SEARCHED (IPC) G06Q |

The present search report has been drawn up for all claims

| Place of search | Date of completion of the search | Examiner |
|---|---|---|
| The Hague | 20 September 2019 | Fernández Ferreira |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 0781

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2019

| Patent document cited in search report | Publication date | Patent family member(s) | Publication date |
|---|---|---|---|
| US 2010030687 A1 | 04-02-2010 | US 2010030687 A1<br>WO 2009092114 A1 | 04-02-2010<br>23-07-2009 |

EPO FORM P0459

For more details about this annex : see Official Journal of the European Patent Office, No. 12/82